(19) **Europäisches Patentamt**
**European Patent Office**
**Office européen des brevets**

(11) **EP 4 207 346 A1**

(12) **EUROPEAN PATENT APPLICATION**
published in accordance with Art. 153(4) EPC

(43) Date of publication:
05.07.2023 Bulletin 2023/27

(51) International Patent Classification (IPC):
$H01M\ 4/13$ $^{(2010.01)}$     $H01M\ 4/139$ $^{(2010.01)}$
$H01M\ 4/62$ $^{(2006.01)}$     $H01G\ 11/06$ $^{(2013.01)}$
$H01G\ 11/36$ $^{(2013.01)}$

(21) Application number: 21861641.5

(22) Date of filing: 25.08.2021

(52) Cooperative Patent Classification (CPC):
H01G 11/06; H01G 11/36; H01M 4/13;
H01M 4/139; H01M 4/62; Y02E 60/10

(86) International application number:
PCT/JP2021/031240

(87) International publication number:
WO 2022/045218 (03.03.2022 Gazette 2022/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.08.2020 JP 2020146308

(71) Applicant: Zeon Corporation
Tokyo 100-8246 (JP)

(72) Inventor: ASAI, Kazuki
Tokyo 100-8246 (JP)

(74) Representative: Maiwald GmbH
Elisenhof
Elisenstraße 3
80335 München (DE)

(54) **CONDUCTIVE MATERIAL DISPERSION LIQUID FOR ELECTROCHEMICAL ELEMENT, SLURRY FOR ELECTROCHEMICAL ELEMENT ELECTRODE, ELECTROCHEMICAL ELEMENT ELECTRODE, AND ELECTROCHEMICAL ELEMENT**

(57)     Provided is a conductive material dispersion liquid for an electrochemical device that has excellent viscosity stability and is capable of forming an electrode that can cause an electrochemical device to display excellent rate characteristics. The conductive material dispersion liquid contains a conductive material, a dispersant including CNTs, and a dispersion medium. The CNTs have a thermal decomposition time of not less than 1.5 min/mg and less than 10 min/mg. The thermal decomposition time is calculated by preparing a thermogravimetric curve and a derivative thermogravimetric curve through thermogravimetric analysis and using formula (I): thermal decomposition time $T = (T_1 - T_0)/W_0$ ($T_0$: elapsed time (min) at which derivative thermogravimetric curve takes local minimum value directly before final peak; Ti: time taken (min) for mass $M_1$ of measurement sample at elapsed time $T_0$ minutes to decrease to $M_1 \times 0.10$ as determined from thermogravimetric curve; $W_0$: weight (mg) of measurement sample when heat treatment at 600°C in air atmosphere begins).

*FIG. 1*

**Description**

TECHNICAL FIELD

The present disclosure relates to a conductive material dispersion liquid for an electrochemical device, a slurry for an electrochemical device electrode, an electrode for an electrochemical device, and an electrochemical device.

BACKGROUND

Electrochemical devices such as lithium ion secondary batteries, lithium ion capacitors, and electric double-layer capacitors have characteristics such as compact size, light weight, high energy-density, and the ability to be repeatedly charged and discharged, and are used in a wide variety of applications. An electrode for an electrochemical device may, for example, include a current collector and an electrode mixed material layer that is formed by drying a slurry for an electrochemical device electrode on the current collector.

In recent years, carbon nanotubes (hereinafter, also abbreviated as "CNTs") have been used as conductive materials in the formation of electrode mixed material layers. A technique in which CNTs serving as a conductive material and a dispersant are premixed to obtain a conductive material dispersion liquid for an electrochemical device and then the obtained conductive material dispersion liquid and an electrode active material are combined to produce a slurry for an electrode has been proposed with the aim of obtaining an electrode mixed material layer having CNTs dispersed well therein when CNTs are used in electrode mixed material layer formation (for example, refer to Patent Literature (PTL) 1 to 3).

CITATION LIST

Patent Literature

>   PTL 1: JP2018-533175A
>   PTL 2: WO2017/010093A1
>   PTL 3: JP2018-127397A

SUMMARY

(Technical Problem)

However, there is demand for enhancing physical properties of a conductive material dispersion liquid while also further improving device characteristics of an electrochemical device in the conventional technique described above. Specifically, there is demand for inhibiting viscosity change (i.e., ensuring viscosity stability) upon long-term storage of a conductive material dispersion liquid while also causing an electrochemical device to display excellent rate characteristics in the conventional technique described above.

Accordingly, one object of the present disclosure is to provide a conductive material dispersion liquid for an electrochemical device that has excellent viscosity stability and is capable of forming an electrode that can cause an electrochemical device to display excellent rate characteristics.

Another object of the present disclosure is to provide a slurry for an electrochemical device electrode that is capable of forming an electrode that can cause an electrochemical device to display excellent rate characteristics.

Another object of the present disclosure is to provide an electrode for an electrochemical device that can cause an electrochemical device to display excellent rate characteristics.

Another object of the present disclosure is to provide an electrochemical device that has excellent rate characteristics.

(Solution to Problem)

The inventor conducted diligent investigation with the aim of solving the problem set forth above. The inventor discovered that a conductive material dispersion liquid containing CNTs as a conductive material and a dispersant in a dispersion medium has excellent viscosity stability in a case in which the thermal decomposition time of the CNTs measured by a specific method is within a specific range, and that by using this conductive material dispersion liquid to produce an electrode, it is possible to cause an electrochemical device to display excellent rate characteristics. In this manner, the inventor completed the present disclosure.

Specifically, the present disclosure aims to advantageously solve the problem set forth above, and a presently disclosed conductive material dispersion liquid for an electrochemical device comprises a conductive material, a dispersant, and a dispersion medium, wherein the conductive material includes one or more carbon nanotubes, and the carbon nanotubes have a thermal decomposition time of not less than 1.5 min/mg and less than 10 min/mg.

The thermal decomposition time is a value determined by: drying the conductive material dispersion liquid for an electrochemical device at a temperature of 130°C for 2 hours to remove the dispersion medium and obtain a residue; heating the residue from 25°C to 600°C at a heating rate of 20°C/min in a nitrogen atmosphere and subsequently heating the residue at 600°C for 10 minutes to prepare a measurement sample; and preparing a thermogravimetric curve and a derivative thermogravimetric curve from mass change and elapsed time when heat treatment of the measurement sample is performed at 600°C in an air atmosphere, and then calculating the thermal decomposition time by formula (I), shown below.

$$\text{Thermal decomposition time } T = (T_1 - T_0)/W_0 \cdots (I)$$

In formula (I):

$T_0$ is an elapsed time (min) at which the derivative thermogravimetric curve takes a local minimum value directly before a final peak;
$T_1$ is time taken (min) for mass $M_1$ of the measurement sample at an elapsed time of $T_0$ minutes to decrease to $M_1 \times 0.10$ as determined from the thermogravimetric curve; and
$W_0$ is weight (mg) of the measurement sample when the heat treatment at 600°C in the air atmosphere begins.

The thermal decomposition time of the CNTs can, more specifically, be derived by a method described in the EXAMPLES section.

A conductive material dispersion liquid that contains a conductive material including CNTs and a dispersant in a dispersion medium and in which the CNTs have a thermal decomposition time within the range set forth above in this manner has excellent viscosity stability, and by using this conductive material dispersion liquid to produce an electrode, it is possible to cause an electrochemical device to display excellent rate characteristics.

In the presently disclosed conductive material dispersion liquid for an electrochemical device, the dispersant preferably includes a nitrile group-containing monomer unit. By using a polymer that includes a nitrile group-containing monomer unit as the dispersant, it is possible to further improve viscosity stability of the conductive material dispersion liquid and rate characteristics of an electrochemical device.

Note that when a polymer such as a dispersant is said to "include a monomer unit" in the present disclosure, this means that "a polymer obtained using that monomer includes a repeating unit derived from the monomer".

Also note that the proportional content of a repeating unit (monomer unit or subsequently described structural unit) in a polymer referred to in the present disclosure can be measured by a nuclear magnetic resonance (NMR) method such as $^1$H-NMR or $^{13}$C-NMR.

Moreover, the present disclosure aims to advantageously solve the problem set forth above, and a presently disclosed slurry for an electrochemical device electrode comprises: any one of the conductive material dispersion liquids for an electrochemical device set forth above; and an electrode active material. By producing an electrode using a slurry for an electrode that contains any one of the conductive material dispersion liquids set forth above and an electrode active material, it is possible to cause an electrochemical device including this electrode to display excellent rate characteristics.

Furthermore, the present disclosure aims to advantageously solve the problem set forth above, and a presently disclosed electrode for an electrochemical device comprises an electrode mixed material layer formed using the slurry for an electrochemical device electrode set forth above. An electrode that includes an electrode mixed material layer formed using the slurry for an electrode set forth above can cause an electrochemical device to display excellent rate characteristics.

Also, the present disclosure aims to advantageously solve the problem set forth above, and a presently disclosed electrochemical device comprises the electrode for an electrochemical device set forth above. An electrochemical device that includes the electrode set forth above has excellent device characteristics such as rate characteristics.

(Advantageous Effect)

According to the present disclosure, it is possible to provide a conductive material dispersion liquid for an electrochemical device that has excellent viscosity stability and is capable of forming an electrode that can cause an electrochemical device to display excellent rate characteristics.

Moreover, according to the present disclosure, it is possible to provide a slurry for an electrochemical device electrode that is capable of forming an electrode that can cause an electrochemical device to display excellent rate characteristics.

Furthermore, according to the present disclosure, it is possible to provide an electrode for an electrochemical device that can cause an electrochemical device to display excellent rate characteristics.

Also, according to the present disclosure, it is possible to provide an electrochemical device that has excellent rate characteristics.

BRIEF DESCRIPTION OF THE DRAWING

In the accompanying drawing,

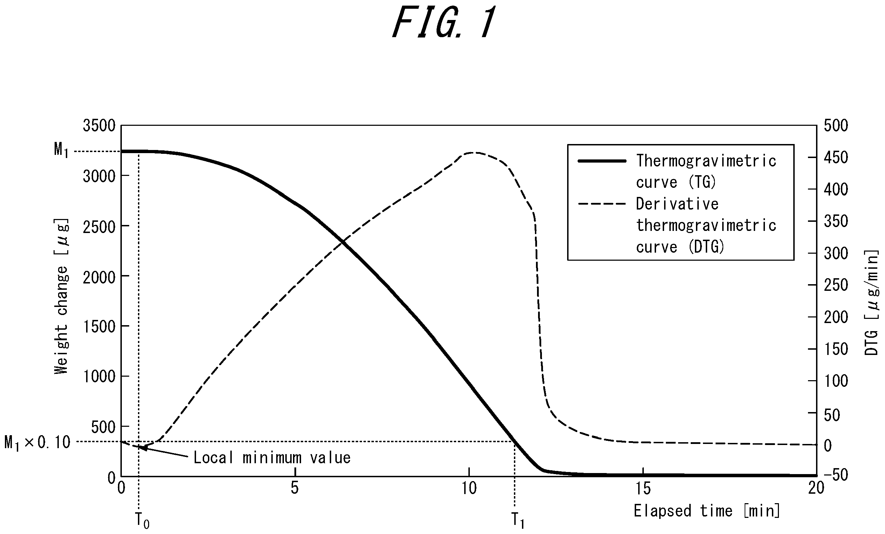

FIG. 1 is a graph illustrating results of thermogravimetric analysis of a measurement sample prepared from a conductive material dispersion liquid in Example 1.

DETAILED DESCRIPTION

The following provides a detailed description of embodiments of the present disclosure.

The presently disclosed conductive material dispersion liquid for an electrochemical device can be used as a material in production of a slurry for an electrochemical device electrode. Moreover, the presently disclosed slurry for an electrochemical device electrode is produced using the presently disclosed conductive material dispersion liquid for an electrochemical device. Furthermore, a feature of the presently disclosed electrode for an electrochemical device is that it includes an electrode mixed material layer formed using the presently disclosed slurry for an electrochemical device electrode. Also, a feature of the presently disclosed electrochemical device is that it includes the presently disclosed electrode for an electrochemical device.

(Conductive material dispersion liquid for electrochemical device)

The presently disclosed conductive material dispersion liquid contains a conductive material, a dispersant, and a dispersion medium and may optionally contain other components. It is a requirement that at least CNTs are used as the conductive material. Note that the conductive material dispersion liquid normally does not contain an electrode active material (positive electrode active material or negative electrode active material).

A feature of the presently disclosed conductive material dispersion liquid is that the thermal decomposition time of the CNTs measured by a specific method is not less than 1.5 min/mg and less than 10 min/mg. A conductive material dispersion liquid such as set forth above has excellent viscosity stability, and by using this conductive material dispersion liquid to produce an electrode, it is possible to improve rate characteristics of an electrochemical device.

Although it is not clear why the above-described effects are displayed by the presently disclosed conductive material dispersion liquid in which the thermal decomposition time of the CNTs is within the range set forth above, the reason for this is presumed to be as follows based on studies conducted by the inventor.

First, the technical significance of the thermal decomposition time is described. The degree of dispersion of a conductive material (for example, acetylene black, which is a particulate conductive material) in a conductive material dispersion liquid is conventionally evaluated through average particle diameter and/or viscosity. On the other hand, CNTs, which are tube-shaped structures, tend to form bundles through Van der Waals forces, and thus various aspects of performance can be improved by breaking up (disentangling) these bundles and then using the CNTs. However, according to studies conducted by the inventor, there are instances in which conventional evaluation by average particle diameter and/or viscosity is inappropriate for evaluating the degree of disentanglement of CNTs (tube-shaped structures). For example, reduction of average particle diameter may be due to severing and shortening of CNTs through dispersing treatment rather than due to disentanglement of bundles of CNTs. Likewise, lowering of viscosity may be due to severing and shortening of CNTs through dispersing treatment and reduction of viscous resistance rather than due to disentanglement of bundles of CNTs. Hence, there are instances in which average particle diameter and viscosity are inappropriate for suitably evaluating a "state in which bundles are disentangled while preserving CNT length", which is necessary for effective use of CNT structures.

In contrast, the present disclosure focuses on thermal decomposition time, which is a parameter that enables more appropriate evaluation of the degree of disentanglement of CNTs in a conductive material dispersion liquid. Specifically, the disentanglement state of CNTs is evaluated from reduction of mass of a measurement sample and time taken for this loss of mass by exploiting the fact that as disentanglement of CNTs proceeds (i.e., as bundles are broken up), the surface area of the CNTs that is actually exposed increases, and the CNTs more readily undergo thermal decomposition (i.e., the rate of mass loss during heat treatment increases). In more detail, a longer thermal decomposition time can be evaluated to indicate lack of progression of disentanglement of CNTs, whereas a shorter thermal decomposition time can be evaluated to indicate progression of disentanglement of CNTs.

Accordingly, when the thermal decomposition time of the CNTs is not more than the upper limit set forth above, it is possible to form good electrical conduction paths in an electrode mixed material layer through the CNTs and to cause an electrochemical device to display excellent rate characteristics, which is presumed to be due to there being good disentanglement of bundles of the CNTs. On the other hand, when the thermal decomposition time of the CNTs is not less than the lower limit set forth above, it is thought that the CNTs have not undergone excessive disentanglement treatment and that the CNTs are present as bundles to a certain extent while also maintaining the length thereof. Consequently, the occurrence of problems caused by severing of CNTs such as inadequate formation or defects in electrical conduction paths, side reactions caused by an increased number of sites having reaction activity, and reduction of viscosity stability of the conductive material dispersion liquid can be suppressed.

Note that BET specific surface area, which is typically given as a physical property of CNTs, is inappropriate for evaluating the disentanglement state (dispersion state) of CNTs because the BET specific surface area is often measured in a bundled state.

<Conductive material>

Although at least CNTs are used as the conductive material, it is also possible to use CNTs and conductive materials other than CNTs (other conductive materials) in combination.

<<Carbon nanotubes>>

The CNTs may be single-walled carbon nanotubes or may be multi-walled carbon nanotubes. Moreover, single-walled CNTs and multi-walled CNTs may be used in combination as the CNTs.

[Thermal decomposition time]

The CNTs in the presently disclosed conductive material dispersion liquid are required to have a thermal decomposition time that is within a specific range as previously described.

The following provides a detailed description of a measurement method of the thermal decomposition time The thermal decomposition time can be derived by the following procedures [1] to [3].

[1] Drying the conductive material dispersion liquid at a temperature of 130°C for 2 hours to remove the dispersion medium and obtain a residue

[2] Heating the residue obtained in [1] from 25°C to 600°C at a heating rate of 20°C/min in a nitrogen atmosphere and subsequently heating the residue at 600°C for 10 minutes to prepare a measurement sample

[3] Preparing a thermogravimetric curve and a derivative thermogravimetric curve from mass change and elapsed time when the measurement sample obtained in [2] is heat treated at 600°C in an air atmosphere, and then calculating the thermal decomposition time by the previously described formula (I)

-Procedure [1]-

In procedure [1], the conductive material dispersion liquid is dried at a temperature of 130°C for 2 hours. Through this procedure [1], the dispersion medium contained in the conductive material dispersion liquid is volatilized and removed to obtain a residue. Note that it is not essential for the dispersion medium to be completely removed from the obtained residue, and some of the dispersion medium may remain in the residue. Drying of the conductive material dispersion liquid can be performed using any device without any specific limitations.

-Procedure [2]-

In procedure [2], the residue obtained in procedure [1] is heated from 25°C to 600°C at a heating rate of 20°C/min in a nitrogen atmosphere and is subsequently heated at 600°C for 10 minutes. Through this procedure [2], a polymer such as the dispersant decomposes and is removed while maintaining the disentanglement state of the CNTs serving as the conductive material, and thus a measurement sample can be obtained. Note that in a situation in which some of the dispersion medium remains in procedure [1], this dispersion medium is removed in procedure [2].

Heating of the residue in a nitrogen atmosphere can be performed using any device without any specific limitations, but is preferably performed using a thermogravimetric analyzer. This is because the use of a thermogravimetric analyzer makes it possible to continuously implement procedure [3] after procedure [2] inside a single thermogravimetric analyzer and makes it possible to determine the state of removal of polymer from weight change data.

The measurement sample obtained in procedure [2] normally contains the CNTs in substantially the same state as in the residue. Note that the measurement sample may contain polymer that has been carbonized by heating and/or components that can optionally be contained in the conductive material dispersion liquid.

-Procedure [3]-

In procedure [3], thermogravimetric analysis is performed with respect to the measurement sample obtained in procedure [2]. Specifically, heat treatment is performed at 600°C in an air atmosphere, and the change over time of mass of the measurement sample (mass change) is measured. Moreover, a thermogravimetric curve and a derivative thermogravimetric curve are prepared from the mass change and elapsed time, and then the thermal decomposition time is calculated by formula (I).

The heat treatment of the measurement sample at 600°C in an air atmosphere is preferably performed by, after performing procedure [2] using a thermogravimetric analyzer, converting the used nitrogen atmosphere to an air atmosphere in procedure [3].

The measurement sample can contain components other than the CNTs such as polymer that has been carbonized in procedure [2]. Moreover, in a case in which a CNT component is contained in the measurement sample, the change over time of mass of the measurement sample during thermogravimetric analysis of the measurement sample is inclusive of change of mass other than for the CNTs. Therefore, procedure [3] is preferably performed as follows from a viewpoint of evaluating the disentanglement state of the CNTs with higher accuracy.

Specifically, procedure [3] involves performing an operation [3-1] of obtaining a derivative thermogravimetric curve from mass change of the measurement sample obtained in procedure [2] and elapsed time, an operation [3-2] of determining an elapsed time $T_0$ at which the derivative thermogravimetric curve takes a local minimum value directly before a peak on the derivative thermogravimetric curve corresponding to combustion of the CNTs, and an operation [3-3] of determining time $T_1$ taken for mass $M_1$ of the measurement sample at the elapsed time $T_0$ to decrease to $M_1 \times 0.10$.

Mass change of the measurement sample occurring after the elapsed time $T_0$ on the derivative thermogravimetric curve corresponds to mass change of only the CNTs. Accordingly, by determining the time $T_1$ taken for the mass $M_1$ of the measurement sample at the elapsed time $T_0$ to decrease to $M_1 \times 0.10$ and evaluating the disentanglement state of the CNTs in the measurement sample from the time taken, it is possible to reduce the influence of components other than the CNTs that are contained in the measurement sample and to evaluate the disentanglement state of the CNTs with high accuracy.

Note that, in general, the final peak on the derivative thermogravimetric curve is a peak that corresponds to combustion of the CNTs.

The derivative thermogravimetric curve is obtained by, for example, calculating a time derivative of a thermogravimetric loss curve for the measurement sample obtained through fitting of mass change of the measurement sample and elapsed time. More specifically, the derivative thermogravimetric curve can be obtained by, for example, using a double Boltzmann function, shown below, to perform fitting of mass change of the measurement sample and elapsed time, and then calculating a time derivative of a thermogravimetric loss curve for the measurement sample that is obtained thereby, but is not specifically limited to being obtained in this manner.

$$y = y_0 + A\left[\frac{p}{1 + e^{\frac{x - x_{01}}{k_1}}} + \frac{1 - p}{1 + e^{\frac{x - x_{02}}{k_2}}}\right]$$

The thermal decomposition time of the CNTs is then calculated by formula (I), shown below,

$$\text{Thermal decomposition time } T = (T_1 - T_0)/W_0 \cdots (I)$$

using values for $T_0$ (units: min) and $T_1$ (units: min) obtained as described above and the mass $W_0$ (units: mg) of the measurement sample when the heat treatment at 600°C in an air atmosphere begins.

The thermal decomposition time of the CNTs is required to be not less than 1.5 min/mg and less than 10 min/mg as previously described, is preferably 1.8 min/mg or more, and more preferably 2.2 min/mg or more, and is preferably less than 8 min/mg, and more preferably less than 5 min/mg. Viscosity stability of the conductive material dispersion liquid decreases in a situation in which the thermal decomposition time of the CNTs is less than 1.5 min/mg, whereas rate characteristics of an electrochemical device deteriorate in a situation in which the thermal decomposition time of the CNTs is 10 min/mg or more. Moreover, when the thermal decomposition time is within any of the ranges set forth above, gas release in an electrochemical device can be inhibited while also improving cycle characteristics of the electrochemical device. In addition, the viscosity of the conductive material dispersion liquid can be suppressed to a low level at the same solid content concentration.

Note that the thermal decomposition time of the CNTs in the conductive material dispersion liquid can be adjusted by altering the type of dispersant that is used and can also be adjusted by altering settings of various conditions in the subsequently described production method of the conductive material dispersion liquid, for example.

The BET specific surface area of the CNTs is preferably 180 $m^2/g$ or more, and more preferably 200 $m^2/g$ or more, and is preferably 1,500 $m^2/g$ or less, and more preferably 1,000 $m^2/g$ or less. When the BET specific surface area of the CNTs is 180 $m^2/g$ or more, rate characteristics of an electrochemical device can be further improved. In addition, gas release in an electrochemical device can be inhibited while also enhancing cycle characteristics of the electrochemical device. On the other hand, when the BET specific surface area of the CNTs is 1,500 $m^2/g$ or less, the viscosity of the conductive material dispersion liquid can be suppressed to a low level at the same solid content concentration.

Note that the "BET specific surface area" referred to in the present disclosure is the nitrogen adsorption specific surface area measured by the BET method.

CNTs synthesized by a known CNT synthesis method such as arc discharge, laser ablation, or chemical vapor deposition (CVD) can be used as the CNTs without any specific limitations.

<<Other conductive materials>>

Any material that functions as a conductive material that can ensure electrical contact among an electrode active material in an electrode mixed material layer can be used as another conductive material without any specific limitations. Examples of other conductive materials include carbon materials other than CNTs. Examples of such carbon materials include carbon black (for example, acetylene black, Ketjenblack® (Ketjenblack is a registered trademark in Japan, other countries, or both), and furnace black), graphite, carbon flake, and carbon nanofiber. One of these carbon materials may be used individually, or two or more of these carbon materials may be used in combination.

Note that CNTs may be used by themselves as the conductive material, or CNTs and another conductive material may be used in combination as the conductive material as previously described. However, from a viewpoint of achieving the desired effects well, the proportion constituted by the CNTs among the overall conductive material when the mass of the overall conductive material is taken to be 100 mass% is preferably not less than 20 mass% and not more than 100 mass%, more preferably not less than 50 mass% and not more than 100 mass%, even more preferably not less than 80 mass% and not more than 100 mass%, and particularly preferably 100 mass% (i.e., the conductive material is particularly preferably composed of just CNTs).

<<Content of CNTs>>

Although no specific limitations are placed on the content of the CNTs in the conductive material dispersion liquid, the content of the CNTs when the mass of the overall conductive material dispersion liquid is taken to be 100 mass% is preferably 1.0 mass% or more, more preferably 2.0 mass% or more, and even more preferably 3.0 mass% or more, and is preferably 30.0 mass% or less, more preferably 15.0 mass% or less, and even more preferably 7.0 mass% or less. When the content of the CNTs in the conductive material dispersion liquid is within any of the ranges set forth above, viscosity stability of the conductive material dispersion liquid and rate characteristics of an electrochemical device can be further improved. Moreover, when the content of the CNTs in the conductive material dispersion liquid is within any of the ranges set forth above, gas release in an electrochemical device can be inhibited while also improving cycle characteristics of the electrochemical device. In addition, the viscosity of the conductive material dispersion liquid can be suppressed to a low level.

<Dispersant>

The dispersant is not specifically limited so long as it is a polymer that can cause dispersion of the conductive material including CNTs described above in the dispersion medium. A polymer that includes a nitrile group-containing monomer unit is preferable as such a polymer.

«Nitrile group-containing monomer unit»

Examples of nitrile group-containing monomers that can form a nitrile group-containing monomer unit include $\alpha,\beta$-ethylenically unsaturated nitrile monomers. Specifically, any $\alpha,\beta$-ethylenically unsaturated compound that has a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Note that one nitrile group-containing monomer may be used individually, or two or more nitrile group-containing monomers may be used in combination in a freely selected ratio. Of these nitrile group-containing monomers, acrylonitrile is preferable.

The proportional content of nitrile group-containing monomer units in the dispersant (polymer) when all repeating units in the polymer constituting the dispersant are taken to be 100 mass% is preferably 10 mass% or more, more preferably 15 mass% or more, and even more preferably 20 mass% or more, and is preferably 50 mass% or less, more preferably 45 mass% or less, and even more preferably 40 mass% or less. When the proportional content of nitrile group-containing monomer units in the dispersant is within any of the ranges set forth above, solubility of the dispersant in the dispersion medium (for example, N-methyl-2-pyrrolidone) is sufficiently ensured, and an obtained electrode mixed material layer can be caused to closely adhere well to a current collector. Consequently, it is possible to disperse the conductive material well in the conductive material dispersion liquid and to further increase viscosity stability of the conductive material dispersion liquid. In addition, rate characteristics of an electrochemical device can be further improved.

<<Examples of polymer including nitrile group-containing monomer unit>>

The polymer including a nitrile group-containing monomer unit is preferably a polymer including a nitrile group-containing monomer unit and an alkylene structural unit or a polymer including a nitrile group-containing monomer unit and a (meth)acrylic acid ester monomer unit, for example, with a polymer including a nitrile group-containing monomer unit and an alkylene structural unit being preferable from a viewpoint of further improving viscosity stability of the conductive material dispersion liquid and rate characteristics of an electrochemical device and from a viewpoint of inhibiting gas release in an electrochemical device while also enhancing cycle characteristics of the electrochemical device.

Note that the term "alkylene structural unit" as used in the present disclosure refers to a repeating unit that is composed of only an alkylene structure represented by a general formula: $-C_nH_{2n}-$ (n is an integer of 2 or more).

Moreover, in the present disclosure, "(meth)acryl" is used to indicate "acryl" and/or "methacryl".

[Polymer including nitrile group-containing monomer unit and alkylene structural unit]

This polymer includes at least an alkylene structural unit in addition to a nitrile group-containing monomer unit such as previously described and can optionally include repeating units other than the nitrile group-containing monomer unit and the alkylene structural unit (i.e., other repeating units).

-Alkylene structural unit-

Although the alkylene structural unit may be linear or branched, the alkylene structural unit is preferably linear (i.e., is preferably a linear alkylene structural unit) from a viewpoint of further improving rate characteristics of an electrochemical device. Moreover, the carbon number of the alkylene structural unit is preferably 4 or more (i.e., n in the preceding general formula is preferably an integer of 4 or more).

No specific limitations are placed on the method by which the alkylene structural unit is introduced into the dispersant (polymer). For example, method (1) or (2) described below may be used.

(1) A method in which a polymer is produced from a monomer composition containing a conjugated diene monomer and then the polymer is hydrogenated in order to convert a conjugated diene monomer unit to an alkylene structural unit

(2) A method in which a polymer is produced from a monomer composition containing a 1-olefin monomer

Of these methods, method (1) is preferable in terms of ease of production of the dispersant.

The conjugated diene monomer may be a conjugated diene compound having a carbon number of 4 or more such as 1,3-butadiene, isoprene, 2,3-dimethyl-1,3-butadiene, 2-ethyl-1,3-butadiene, or 1,3-pentadiene, for example. Of these conjugated diene compounds, 1,3-butadiene is preferable. In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene monomer unit (i.e., is more preferably a hydrogenated 1,3-butadiene unit).

The 1-olefin monomer may be ethylene, propylene, 1-butene, or the like, for example.

One of these conjugated diene monomers or 1-olefin monomers may be used individually, or two or more of these conjugated diene monomers or 1-olefin monomers may be used in combination in a freely selected ratio.

The proportional content of alkylene structural units in the dispersant (polymer) when all repeating units in the polymer constituting the dispersant are taken to be 100 mass% is preferably 40 mass% or more, more preferably 45 mass% or more, and even more preferably 50 mass% or more, and is preferably 90 mass% or less, more preferably 85 mass% or less, and even more preferably 80 mass% or less. When the proportional content of alkylene structural units in the dispersant is within any of the ranges set forth above, it is possible to further improve viscosity stability of the conductive material dispersion liquid, which is presumed to be due to increased affinity between the conductive material (CNTs, etc.) and the dispersant. In addition, it is possible to inhibit decomposition of electrolyte solution at the surface of the conductive material and to inhibit gas release in an electrochemical device as a result of the conductive material (CNTs, etc.) being covered well by the dispersant.

Note that in a case in which the dispersant is a polymer obtained according to method (1) described above, the total proportion constituted by alkylene structural units and conjugated diene monomer units in the dispersant preferably satisfies any of the ranges set forth above.

-Other repeating units-

Examples of other repeating units in the polymer including a nitrile group-containing monomer unit and an alkylene structural unit include, but are not specifically limited to, an aromatic vinyl monomer unit, an acidic group-containing monomer unit, and a (meth)acrylic acid ester monomer unit. Note that the polymer including a nitrile group-containing monomer unit and an alkylene structural unit may include one type of other repeating unit or may include two or more types of other repeating units.

Examples of aromatic vinyl monomers that can form an aromatic vinyl monomer unit include styrene, α-methylstyrene, p-t-butylstyrene, butoxystyrene, vinyltoluene, chlorostyrene, and vinylnaphthalene. One aromatic vinyl monomer may be used individually, or two or more aromatic vinyl monomers may be used in combination in a freely selected ratio. Of these aromatic vinyl monomers, styrene is preferable.

Examples of acidic group-containing monomers that can form an acidic group-containing monomer unit include carboxy group-containing monomers, sulfo group-containing monomers, and phosphate group-containing monomers. One acidic group-containing monomer may be used individually, or two or more acidic group-containing monomers may be used in combination in a freely selected ratio.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

An acid anhydride that produces a carboxy group through hydrolysis can also be used as a carboxy group-containing monomer. Of these examples, acrylic acid and methacrylic acid are preferable as carboxy group-containing monomers.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. One (meth)acrylic acid ester monomer may be used individually, or two or more (meth)acrylic acid ester monomers may be used in combination in a freely selected ratio.

The proportional content of other repeating units in the polymer including a nitrile group-containing monomer unit and an alkylene structural unit when all repeating units in the polymer are taken to be 100 mass% is preferably not less than 0 mass% and not more than 30 mass%, more preferably not less than 0 mass% and not more than 20 mass%, even more preferably not less than 0 mass% and not more than 10 mass%, and particularly preferably not less than 0 mass% and not more than 5 mass%.

[Polymer including nitrile group-containing monomer unit and (meth)acrylic acid ester monomer unit]

This polymer includes at least a (meth)acrylic acid ester monomer unit in addition to a nitrile group-containing monomer unit such as previously described and can optionally include repeating units other than the nitrile group-containing monomer unit and the (meth)acrylic acid ester monomer unit (i.e., other repeating units).

Examples of (meth)acrylic acid ester monomers that can form a (meth)acrylic acid ester monomer unit include the same (meth)acrylic acid ester monomers as previously described in the "Polymer including nitrile group-containing monomer unit and alkylene structural unit" section. One (meth)acrylic acid ester monomer may be used individually, or two or more (meth)acrylic acid ester monomers may be used in combination in a freely selected ratio. Of these (meth)acrylic acid ester monomers, 2-ethylhexyl acrylate is preferable.

The proportional content of (meth)acrylic acid ester monomer units in the dispersant (polymer) when all repeating units in the polymer constituting the dispersant are taken to be 100 mass% is preferably 10 mass% or more, more preferably 20 mass% or more, and even more preferably 30 mass% or more, and is preferably 70 mass% or less, more preferably 60 mass% or less, and even more preferably 50 mass% or less.

-Other repeating units-

Although other repeating units in the polymer including a nitrile group-containing monomer unit and a (meth)acrylic acid ester monomer unit are not specifically limited, an aromatic vinyl monomer unit and an acidic group-containing monomer unit are preferable. The polymer including a nitrile group-containing monomer unit and a (meth)acrylic acid ester monomer unit that serves as the dispersant may include one type of other repeating unit or may include two or more types of other repeating units.

Examples of aromatic vinyl monomers that can form an aromatic vinyl monomer unit include the same aromatic vinyl monomers as previously described in the "Polymer including nitrile group-containing monomer unit and alkylene structural unit" section. One aromatic vinyl monomer may be used individually, or two or more aromatic vinyl monomers may be used in combination in a freely selected ratio. Of these aromatic vinyl monomers, styrene is preferable.

The proportional content of aromatic vinyl monomer units in the dispersant (polymer) when all repeating units in the polymer constituting the dispersant are taken to be 100 mass% is preferably 10 mass% or more, more preferably 20 mass% or more, and even more preferably 30 mass% or more, and is preferably 70 mass% or less, more preferably 60 mass% or less, and even more preferably 50 mass% or less.

Examples of acidic group-containing monomers that can form an acidic group-containing monomer unit include the same acidic group-containing monomers as previously described in the "Polymer including nitrile group-containing monomer unit and alkylene structural unit" section. One acidic group-containing monomer may be used individually, or two or more acidic group-containing monomers may be used in combination in a freely selected ratio. Of these acidic group-containing monomers, methacrylic acid is preferable.

The proportional content of acidic group-containing monomer units in the dispersant (polymer) when all repeating units in the polymer constituting the dispersant are taken to be 100 mass% is preferably 0.5 mass% or more, more preferably 1 mass% or more, and even more preferably 1.5 mass% or more, and is preferably 10 mass% or less, more preferably 7 mass% or less, and even more preferably 4 mass% or less.

«Weight-average molecular weight»

The weight-average molecular weight of the dispersant (polymer) is preferably 10,000 or more, more preferably 15,000 or more, and even more preferably 20,000 or more, and is preferably 400,000 or less, more preferably 300,000 or less, and even more preferably 200,000 or less. When the weight-average molecular weight of the dispersant is 10,000 or more, cycle characteristics of an electrochemical device can be improved, which is presumed to be due to elution of the dispersant into electrolyte solution being inhibited. On the other hand, when the weight-average molecular weight of the dispersant is 400,000 or less, gas release in an electrochemical device can be inhibited while also further improving rate characteristics of the electrochemical device. In addition, the viscosity of the conductive material dispersion liquid can be suppressed to a low level at the same solid content concentration.

Note that the "weight-average molecular weight" referred to in the present disclosure can be measured by a method described in the EXAMPLES section.

<<Production method of dispersant>>

No specific limitations are placed on the method by which the dispersant is produced. For example, the dispersant may be produced by performing polymerization of a monomer composition containing one monomer or two or more monomers in an aqueous solvent and then optionally performing hydrogenation. Note that the proportional contents of monomers in the monomer composition can be set in accordance with the desired proportional contents of repeating units (monomer units and/or structural units) in the polymer.

Although the polymerization method is not specifically limited, a method such as solution polymerization, suspension polymerization, bulk polymerization, or emulsion polymerization may be used. Moreover, any of ionic polymerization, radical polymerization, living radical polymerization, various types of condensation polymerization, addition polymerization, and so forth can be adopted as the polymerization reaction. Furthermore, a known emulsifier and/or polymerization initiator may be used in the polymerization as necessary. The hydrogenation can be performed by a known method.

<<Content of dispersant>>

Although no specific limitations are placed on the content of the dispersant in the conductive material dispersion liquid, the content of the dispersant when the mass of the overall conductive material dispersion liquid is taken to be 100 mass% is preferably 0.1 mass% or more, more preferably 0.2 mass% or more, and even more preferably 0.5 mass% or more, and is preferably 3.0 mass% or less, more preferably 2.5 mass% or less, and even more preferably 2.0 mass% or less. When the content of the dispersant is within any of the ranges set forth above, viscosity stability of the conductive material dispersion liquid and rate characteristics of an electrochemical device can be further improved. Moreover, when the content of the dispersant is within any of the ranges set forth above, gas release in an electrochemical device can be inhibited while also improving cycle characteristics of the electrochemical device. In addition, the viscosity of the conductive material dispersion liquid can be suppressed to a low level.

<Dispersion medium>

The dispersion medium can be water or an organic solvent, but is preferably an organic solvent. Examples of organic solvents that may be used include, but are not specifically limited to, alcohols such as methanol, ethanol, n-propanol, isopropanol, n-butanol, isobutanol, t-butanol, pentanol, hexanol, heptanol, octanol, nonanol, decanol, and amyl alcohol; ketones such as acetone, methyl ethyl ketone, and cyclohexanone; esters such as ethyl acetate and butyl acetate; ethers such as diethyl ether, dioxane, and tetrahydrofuran; amide organic solvents such as N,N-dimethylformamide and N-methyl-2-pyrrolidone (NMP); and aromatic hydrocarbons such as toluene, xylene, chlorobenzene, orthodichlorobenzene, and paradichlorobenzene. One dispersion medium may be used individually, or two or more dispersion mediums may be used in combination in a freely selected ratio. From a viewpoint of dispersing the conductive material (CNTs, etc.) well in the conductive material dispersion liquid, the dispersion medium is preferably an organic solvent, and more preferably NMP.

<Other components>

Examples of other components that can be contained in the conductive material dispersion liquid include components other than an electrode active material that are subsequently described in the "Slurry for electrochemical device electrode" section, but are not specifically limited thereto. One other component may be used individually, or two or more other components may be used in combination in a freely selected ratio.

<Solid content concentration>

The proportion constituted by solid content among the overall conductive material dispersion liquid (i.e., the solid content concentration) in the presently disclosed conductive material dispersion liquid is preferably 1.0 mass% or more, more preferably 3.0 mass% or more, even more preferably 4.0 mass% or more, and particularly preferably 5.0 mass% or more, and is preferably 30.0 mass% or less, more preferably 15.0 mass% or less, even more preferably 10.0 mass% or less, and particularly preferably 7.0 mass% or less. When the solid content concentration of the conductive material dispersion liquid is within any of the ranges set forth above, it is possible to place the viscosity and/or viscosity stability of the conductive material dispersion liquid in a suitable condition for processes such as transfer in a slurry production process. Moreover, this makes it easy to control an obtained slurry for an electrode to an appropriate solid content concentration and enables efficient production of an electrode having good electrical conduction paths formed therein.

<Production method of conductive material dispersion liquid>

The conductive material dispersion liquid in which the CNTs have a thermal decomposition time within the range set forth above can be produced by a method in which mixing of components such as the above-described conductive material, dispersant, and dispersion medium is performed through a dispersing step having at least two stages (first dispersing step and second dispersing step), for example. In this method, the thermal decomposition time of the CNTs contained in the conductive material dispersion liquid can be controlled through adjustment of conditions of dispersing treatment (type, rotation speed, and circumferential speed of dispersing device, time and temperature of dispersing treatment, and quantitative ratio of CNTs and dispersant during dispersing treatment) in the first dispersing step and/or the second dispersing step.

The following describes suitable conditions for controlling the thermal decomposition time of CNTs in a conductive material dispersion liquid to be within the range set forth above through a two-stage dispersing step. Note that in this configuration, the two-stage dispersing step is normally performed using different dispersing devices. By using different dispersing devices in the two-stage dispersing step, it is possible to perform dispersing treatment of a dispersion subject by different methods in an initial stage of dispersing (crude dispersing stage) and a later stage of dispersing (main dispersing stage) and to thereby easily produce a novel conductive material dispersion liquid in which CNTs have a thermal decomposition time within the range set forth above. Also note that in this configuration, steps other than the first dispersing step and the second dispersing step may be performed.

A technique of altering the addition method of a dispersant or the ratio of a conductive material and a dispersant has previously been employed in order to control the state of adsorption of a dispersant to a conductive material. A technique such as described above does indeed enable control of the adsorption state in a case in which carbon black is used as a conductive material. However, the presently disclosed conductive material dispersion liquid contains CNTs as a conductive material, and thus it is important to further control multiple factors in order to control the adsorption state.

It should be noted that the production method of the presently disclosed conductive material dispersion liquid is not necessarily limited to the configuration described below.

<<First dispersing step>>

In the first dispersing step, a composition containing at least CNTs, a dispersant, and a dispersion medium is subjected to dispersing treatment to obtain a crude dispersion. The main object of the first dispersing step is to cause wetting (blending) of the CNTs (dispersion subject) with the dispersant and the dispersion medium.

The dispersing device that is used in the first dispersing step may be a disper blade, a Homo Mixer, a planetary mixer, a kneader, or a ball mill, for example. Moreover, the dispersing device used in the first dispersing step is preferably a disper blade or a planetary mixer, and more preferably a disper blade.

In a situation in which a disper blade is used as the dispersing device, the rotation speed is preferably 500 rpm or more, more preferably 1,000 rpm or more, and even more preferably 2,000 rpm or more, and is preferably 8,000 rpm or less, more preferably 7,000 rpm or less, and even more preferably 6,000 rpm or less.

In a situation in which a planetary mixer is used as the dispersing device, the rotation speed is preferably 5 rpm or more, more preferably 10 rpm or more, and even more preferably 30 rpm or more, and is preferably 150 rpm or less, more preferably 120 rpm or less, and even more preferably 100 rpm or less.

The dispersing treatment time in the first dispersing step is preferably 12 minutes or more, more preferably 15 minutes or more, and even more preferably 20 minutes or more, and is preferably 60 minutes or less, more preferably 50 minutes or less, and even more preferably 40 minutes or less.

From a viewpoint of controlling molecular mobility of the dispersant and the dispersion medium and also of controlling the viscosity of the dispersion system and the degree of interaction of the CNTs, dispersion medium, and dispersant, the dispersing treatment temperature in the first dispersing step is preferably 5°C or higher, and is preferably 50°C or lower, more preferably 45°C or lower, even more preferably 35°C or lower, and particularly preferably 25°C or lower. The dispersion medium can more easily infiltrate gaps in bundles of CNTs when the dispersing treatment temperature is 5°C or higher, whereas deterioration of the dispersant is inhibited and adsorption of the dispersant to the CNTs is facilitated when the dispersing treatment temperature is 50°C or lower.

With regards to the ratio of the CNTs and the dispersant during dispersing treatment in the first dispersing step, the content of the dispersant in the composition that is subjected to dispersing treatment in the first dispersing step is preferably 5 parts by mass or more, and more preferably 10 parts by mass or more per 100 parts by mass of the CNTs, and is preferably 100 parts by mass or less, and more preferably 50 parts by mass or less per 100 parts by mass of the CNTs. Note that in the first dispersing step, the dispersant may be added all at once in the initial stage of dispersing treatment, or the dispersant may be split up and added. The decision as to whether to adopt single addition or split addition may be made as appropriate depending on adsorption strength of the dispersant, etc.

<<Second dispersing step>>

In the second dispersing step, additional dispersant, or the like, is optionally added to the crude dispersion obtained in the first dispersing step and then further dispersing treatment is performed to obtain a conductive material dispersion liquid. The main object of the second dispersing step is to impart shear force or impact energy in order to disperse and disentangle the CNTs (dispersion subject).

As previously described, a different dispersing device to that used in the first dispersing step is normally used in the second dispersing step. The dispersing device used in the second dispersing step may, for example, be a disper blade, a Homo Mixer, a planetary mixer, a kneader, a ball mill, or a thin-film spin system high-speed mixer such as a FILMIX® (FILMIX is a registered trademark in Japan, other countries, or both). Moreover, the dispersing device used in the second dispersing step is preferably a dispersing device in which media are not used (i.e., is preferably a medialess dispersing device), and is more preferably a thin-film spin system high-speed mixer. In particular, when a dispersing device in which media are used is adopted in the second dispersing step that constitutes main dispersing, there are instances in which contact between the CNTs and the media causes damage and loss of length of the CNTs, which are tube-shaped structures, and in which viscosity stability of the conductive material dispersion liquid and rate characteristics of an electrochemical device deteriorate. In contrast, by using a medialess dispersing device such as a thin-film spin system high-speed mixer, it is possible to efficiently disentangle bundles of CNTs while suppressing damage to the CNTs and to further improve the desired effects.

In a case in which a thin-film spin system high-speed mixer is used as the dispersing device, the circumferential speed is preferably 10 m/s or more, more preferably 20 m/s or more, and even more preferably 25 m/s or more, and is preferably 45 m/s or less, more preferably 40 m/s or less, and even more preferably 35 m/s or less. When the circumferential speed is within any of the ranges set forth above, bundles can be efficiently disentangled without loss of CNT length.

The dispersing treatment time in the second dispersing step is preferably 2 minutes or more, more preferably 3 minutes or more, and even more preferably 4 minutes or more, and is preferably 20 minutes or less, more preferably 10 minutes or less, and even more preferably 7 minutes or less. When the dispersing treatment time is within any of the ranges set forth above, homogenization of the conductive material dispersion liquid is promoted, and reduction of viscosity and improvement of viscosity stability are possible.

The ratio of the CNTs and the dispersant during dispersing treatment in the second dispersing step is normally the same as in the obtained conductive material dispersion liquid. Note that in the second dispersing step, the dispersant may be added all at once in an initial stage of the dispersing treatment, or the dispersant may be split up and added in order to promote efficient adsorption of the dispersant at interfaces newly formed through progression of dispersion and disentanglement of the CNTs.

(Slurry for electrochemical device electrode)

The presently disclosed slurry for an electrode contains the conductive material dispersion liquid set forth above and an electrode active material, and may contain optional components such as a binder as necessary. In other words, the presently disclosed slurry for an electrode contains a conductive material including one or more CNTs, a dispersant, and a dispersion medium, and may contain optional components such as a binder as necessary.

An electrode that includes an electrode mixed material layer formed from a slurry for an electrode containing the conductive material dispersion liquid set forth above in this manner makes it possible to cause an electrochemical device to display excellent rate characteristics.

<Electrode active material>

Known electrode active materials can be used as the electrode active material (positive electrode active material or negative electrode active material) contained in the slurry for an electrode without any specific limitations.

A positive electrode active material that is used in a lithium ion secondary battery, for example, may be a metal oxide containing lithium (Li), but is not specifically limited thereto. Moreover, the positive electrode active material is preferably a positive electrode active material that contains one or more selected from the group consisting of cobalt (Co), nickel (Ni), manganese (Mn), and iron (Fe) in addition to lithium (Li). Examples of such positive electrode active materials include lithium-containing cobalt oxide ($LiCoO_2$), lithium manganate ($LiMn_2O_4$), lithium-containing nickel oxide ($LiNiO_2$), a lithium-containing complex oxide of Co-Ni-Mn, a lithium-containing complex oxide of Ni-Mn-Al, a lithium-containing complex oxide of Ni-Co-Al, olivine-type lithium manganese phosphate ($LiMnPO_4$), olivine-type lithium iron

phosphate (LiFePO$_4$), a lithium-rich spinel compound represented by Li$_{1+x}$Mn$_{2-x}$O$_4$ (0 < x < 2), Li[Ni$_{0.17}$Li$_{0.2}$Co$_{0.07}$Mn$_{0.56}$]O$_2$, and LiNi$_{0.5}$Mn$_{1.5}$O$_4$. Note that one positive electrode active material may be used individually, or two or more positive electrode active materials may be used in combination in a freely selected ratio.

Also note that the particle diameter of the electrode active material is not specifically limited and may be the same as that of a conventionally used electrode active material.

The amount of the electrode active material in the slurry for an electrode is also not specifically limited and can be set within a range that is conventionally adopted.

<Optional components>

Examples of optional components that can be contained in the slurry for an electrode include binders, viscosity modifiers, reinforcing materials, antioxidants, and additives for electrolyte solution having a function of inhibiting electrolyte solution decomposition. One of these optional components may be used individually, or two or more of these optional components may be used in combination in a freely selected ratio.

Of the optional components described above, the inclusion of a binder in the slurry for an electrode is preferable from a viewpoint of causing an obtained electrode mixed material layer to closely adhere well to a current collector.

<<Binder>>

The binder is not specifically limited but may preferably be polyacrylonitrile (PAN), polyvinyl alcohol (PVOH), or a fluorine-containing resin such as polyvinylidene fluoride (PVDF), and more preferably be a fluorine-containing resin or PAN, for example.

The amount of the binder in the slurry for an electrode is not specifically limited and can be set within a range that is conventionally adopted.

<Production method of slurry for electrode>

Mixing of the above-described components to obtain the slurry for an electrode can be performed using a typical mixing device without any specific limitations on the mixing method.

(Electrode for electrochemical device)

The presently disclosed electrode includes an electrode mixed material layer obtained using the presently disclosed slurry for an electrode set forth above. More specifically, the presently disclosed electrode normally includes this electrode mixed material layer on a current collector. The electrode mixed material layer contains an electrode active material, CNTs, and a dispersant, and may optionally contain a binder, etc. The presently disclosed electrode can cause an electrochemical device to display excellent rate characteristics as a result of including an electrode mixed material layer that is formed using the presently disclosed slurry for an electrode set forth above.

<Current collector>

The current collector is formed of a material having electrical conductivity and electrochemical durability. A known current collector can be used as the current collector without any specific limitations. For example, a current collector formed of aluminum or an aluminum alloy can be used as a current collector that is included in a positive electrode of a lithium ion secondary battery. Moreover, aluminum and an aluminum alloy may be used in combination, or different types of aluminum alloys may be used in combination. Aluminum and aluminum alloys make excellent current collector materials due to having heat resistance and being electrochemically stable.

<Production method of electrode>

No specific limitations are placed on the method by which the presently disclosed electrode is produced. For example, the presently disclosed electrode can be produced by applying the presently disclosed slurry for an electrode set forth above onto at least one side of the current collector and then drying the slurry for an electrode to form an electrode mixed material layer. In more detail, this production method includes a step of applying the slurry for an electrode onto at least one side of the current collector (application step) and a step of drying the slurry for an electrode that has been applied onto at least one side of the current collector to form an electrode mixed material layer on the current collector (drying step).

«Application step»

The method by which the slurry for an electrode is applied onto the current collector is not specifically limited and may be a commonly known method. Specific examples of application methods that can be used include doctor blading, dip coating, reverse roll coating, direct roll coating, gravure coating, extrusion coating, and brush coating. In the application, the slurry for an electrode may be applied onto just one side of the current collector or may be applied onto both sides of the current collector. The thickness of the slurry coating on the current collector after application but before drying may be set as appropriate in accordance with the thickness of the electrode mixed material layer to be obtained after drying.

<<Drying step>>

The slurry for an electrode on the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry for an electrode on the current collector in this manner, an electrode mixed material layer can be formed on the current collector to thereby provide an electrode that includes the current collector and the electrode mixed material layer.

After the drying step, the electrode mixed material layer may be further subjected to a pressing process, such as mold pressing or roll pressing. This pressing process enables good close adherence of the electrode mixed material layer to the current collector.

In a case in which the electrode mixed material layer contains a curable polymer, this polymer may be cured after the electrode mixed material layer has been formed.

(Electrochemical device)

The presently disclosed electrochemical device includes the presently disclosed electrode set forth above. Moreover, the presently disclosed electrochemical device has excellent rate characteristics as a result of including the presently disclosed electrode. Note that the presently disclosed electrochemical device may be a non-aqueous secondary battery, for example, and is preferably a lithium ion secondary battery.

The following describes configuration of a lithium ion secondary battery as one example of the presently disclosed electrochemical device. This lithium ion secondary battery includes a positive electrode, a negative electrode, an electrolyte solution, and a separator. At least one of the positive electrode and the negative electrode is the presently disclosed electrode. In other words, the lithium ion secondary battery may be a lithium ion secondary battery in which the positive electrode is the presently disclosed electrode and the negative electrode is an electrode other than the presently disclosed electrode, may be a lithium ion secondary battery in which the positive electrode is an electrode other than the presently disclosed electrode and the negative electrode is the presently disclosed electrode, or may be a lithium ion secondary battery in which the positive electrode and the negative electrode are both the presently disclosed electrode.

<Electrode other than presently disclosed electrode>

Any known electrode can be used without any specific limitations as an electrode that does not correspond to the presently disclosed electrode.

<Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and may preferably be set as 0.5 mass% to 15 mass%, more preferably as 2 mass% to 13 mass%, and even more preferably as 5 mass% to 10 mass%, for example. Known additives such as fluoroethylene carbonate and ethyl methyl sulfone, for example, may be added to the electrolyte solution.

<Separator>

Examples of the separator include, but are not specifically limited to, separators described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

<Production method of lithium ion secondary battery>

The lithium ion secondary battery according to the present disclosure can be produced by, for example, stacking the positive electrode and the negative electrode with the separator in-between, performing rolling, folding, or the like of the resultant laminate, as necessary, in accordance with the battery shape to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. Furthermore, in the case of a polymer that is a hydrogenated polymer obtained through hydrogenation of a polymerized product including conjugated diene monomer units, the total proportional content of non-hydrogenated conjugated diene monomer units and alkylene structural units that are hydrogenated conjugated diene monomer units in the hydrogenated polymer is the same as the ratio (charging ratio) of a conjugated diene monomer among all monomers used in polymerization of the polymerized product.

In the examples and comparative examples, the following methods were used to evaluate the weight-average molecular weight of a dispersant, the thermal decomposition time of CNTs in a conductive material dispersion liquid, the viscosity and viscosity stability of a conductive material dispersion liquid, and the rate characteristics, cycle characteristics, and gas release inhibition of a lithium ion secondary battery.

<Weight-average molecular weight>

The weight-average molecular weight (Mw) of a dispersant (polymer) was measured by gel permeation chromatography (GPC) under the following measurement conditions using LiBr-dimethylformamide (DMF) solution of 10 mM in concentration.

- Separation column: Shodex KD-806M (produced by Showa Denko K.K.)
- Detector: Differential refractive index detector RID-10A (produced by Shimadzu Corporation)
- Flow rate of eluent: 0.3 mL/min
- Column temperature: 40°C
- Standard polymer: TSK standard polystyrene (produced by Tosoh Corporation)

<Thermal decomposition time>

A produced conductive material dispersion liquid was sampled onto an aluminum plate such that there was 1 g of solid content and was dried at 130°C for 2 hours to volatilize the dispersion medium and obtain a residue.

Approximately 3 mg of the obtained residue was set inside a thermogravimetric analyzer (produced by Hitachi High-Tech Corporation; product name: STA7200), was heated from 25°C to 600°C at a heating rate of 20°C/min in a nitrogen gas atmosphere, and was then held at 600°C for 10 minutes to obtain a measurement sample (mass: $W_0$ g).

The atmosphere was switched from a nitrogen gas atmosphere to an air atmosphere while maintaining the temperature at 600°C, and then the temperature was held at 600°C for 30 minutes. A thermogravimetric curve (thermogravimetric loss curve) and a derivative thermogravimetric curve were prepared from the mass change and elapsed time for after switching to the air atmosphere. Each of the prepared curves is illustrated in FIG. 1. Note that the thermogravimetric loss curve was prepared through fitting of the mass change and elapsed time using a double Boltzmann function, and the derivative thermogravimetric curve was prepared by calculating a time derivative of the thermogravimetric loss curve.

Moreover, the elapsed time $T_0$ at which the derivative thermogravimetric curve took a local minimum value directly before a final peak was determined from the derivative thermogravimetric curve, and the mass $M_1$ of the measurement sample at the elapsed time $T_0$ was determined from the thermogravimetric curve. In addition, the time $T_1$ taken for $M_1$ to decrease to $M_1 \times 0.10$ (i.e., the 90% loss time) was determined, and the thermal decomposition time of CNTs was calculated by formula (I): thermal decomposition time $T = (T_1 - T_0)/W_0$.

<Viscosity>

With respect to a produced conductive material dispersion liquid, a rheometer (produced by Anton Paar; product name: MCR 302) was used to measure viscosity with a shear rate range of $10^{-2}$ s$^{-1}$ to $10^3$ s$^{-1}$ at a temperature of 25°C. The value of the viscosity at a shear rate of 10 s$^{-1}$ was used to make an evaluation by the following standard.

    A: Viscosity of less than 5 Pa·s
    B: Viscosity of not less than 5 Pa·s and less than 20 Pa·s
    C: Viscosity of not less than 20 Pa·s and less than 100 Pa·s
    D: Viscosity of 100 Pa·s or more

<Viscosity stability>

With respect to a produced conductive material dispersion liquid, a rheometer (produced by Anton Paar; product name: MCR 302) was used to measure viscosity for 120 seconds at a temperature of 25°C and a shear rate of 10 s$^{-1}$, and an average value of measured values for from 61 seconds to 120 seconds was taken to be $\eta_1$. Next, the conductive material dispersion liquid was stored at 25°C for 3 days and was then stirred for 1 hour using a planetary mixer (rotation speed: 60 rpm). Viscosity measurement was performed for the conductive material dispersion liquid after stirring in the same way as for $\eta_1$, and an average value of measured values was taken to be $\eta_2$. A viscosity ratio (= $\eta_2/\eta_1 \times 100(\%)$) was calculated and was evaluated by the following standard. A smaller value for the viscosity ratio indicates that the conductive material dispersion liquid has better viscosity stability.

    A: Viscosity ratio of not less than 90% and not more than 110%
    B: Viscosity ratio of not less than 80% and less than 90% or viscosity ratio of more than 110% and not more than 120%
    C: Viscosity ratio of not less than 70% and less than 80% or viscosity ratio of more than 120% and not more than 130%
    D: Viscosity ratio of less than 70% or viscosity ratio of more than 130%

<Rate characteristics>

A produced lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was CC-CV charged by a 0.2C constant-current method (upper limit cell voltage 4.20 V) and was then CC discharged to 3.00 V by a 0.2C constant-current method. This charging and discharging at 0.2C was repeated three times.

Next, the lithium ion secondary battery was charged to 4.2 V by a 0.1C constant-current method and was then discharged to 3.0 V at 0.1C in an environment having a temperature of 25°C in order to determine the 0.1C discharge capacity. In addition, the lithium ion secondary battery was charged to 4.2 V at 0.1C and was then discharged to 3.0 V at 1C in order to determine the 1C discharge capacity. These measurements were performed for 10 produced lithium ion secondary battery cells, and average values of the measured values were taken to be the 0.1C discharge capacity (a) and the 1C discharge capacity (b). An electric capacity ratio was calculated (= b/a $\times$ 100(%)) and was evaluated by the following standard. A larger value for the electric capacity ratio indicates that the lithium ion secondary battery has better rate characteristics.

A: Electric capacity ratio of 90% or more
B: Electric capacity ratio of not less than 80% and less than 90%
C: Electric capacity ratio of not less than 70% and less than 80%
D: Electric capacity ratio of less than 70%

<Cycle characteristics>

A produced lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was CC-CV charged by a 0.2C constant-current method (upper limit cell voltage 4.20 V) and was then CC discharged to 3.00 V by a 0.2C constant-current method. This charging and discharging at 0.2C was repeated three times.
Next, the lithium ion secondary battery was subjected to 100 cycles of a charge/discharge operation with a cell voltage of 4.20 V to 3.00 V and a charge/discharge rate of 1.0C in an environment having a temperature of 45°C. The discharge capacity of the 1st cycle was defined as X1, and the discharge capacity of the 100th cycle was defined as X2. The discharge capacity X1 and the discharge capacity X2 were used to calculate a capacity maintenance rate (= (X2/X1) $\times$ 100(%)), which was then evaluated by the following standard. A larger value for the capacity maintenance rate indicates that the lithium ion secondary battery has better cycle characteristics.

A: Capacity maintenance rate of 93% or more
B: Capacity maintenance rate of not less than 90% and less than 93%
C: Capacity maintenance rate of not less than 87% and less than 90%
D: Capacity maintenance rate of less than 87%

<Gas release inhibition>

A produced lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C, and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was CC-CV charged by a 0.2C constant-current method (upper limit cell voltage 4.20 V) and was then CC discharged to 3.00 V by a 0.2C constant-current method. This charging and discharging at 0.2C was repeated three times.
Next, a charge/discharge operation of charging to 4.20 V at 0.1C and then discharging to 3.00 V at 0.1C was performed in a 25°C environment, the battery was then immersed in liquid paraffin, and the volume $V_0$ thereof was measured.
In addition, an operation in which charging to 4.20 V at 1C and discharging to 3.00 V at 1C was taken to be 1 cycle was repeated for 200 cycles in a 60°C environment. Thereafter, the battery was immersed in liquid paraffin, and the volume $V_1$ thereof was measured.
The cell volume change $\Delta V$ between before and after 200 cycles of charging and discharging was calculated by a formula "$\Delta V = (V_1 - V_0)/V_0 \times 100(\%)$" and was evaluated by the following standard. A smaller value for the volume change $\Delta V$ indicates that the lithium ion secondary battery has better gas release inhibiting ability.

A: $\Delta V$ of less than 18%
B: $\Delta V$ of not less than 18% and less than 22%
C: $\Delta V$ of not less than 22% and less than 26%
D: $\Delta V$ of 26% or more

(Example 1)

<Production of dispersant (HNBR-1)>

A reactor having an internal capacity of 10 L was charged with 100 parts of deionized water and 35 parts of acrylonitrile and 65 parts of 1,3-butadiene as monomers, and then 2 parts of potassium oleate as an emulsifier, 0.1 parts of potassium phosphate as a stabilizer, and 0.7 parts of tert-dodecyl mercaptan (TDM) as a molecular weight modifier were further added, and emulsion polymerization was performed at 30°C in the presence of 0.35 parts of potassium persulfate as a polymerization initiator so as to copolymerize the 1,3-butadiene and acrylonitrile.

At the point at which the polymerization conversion rate reached 90%, 0.2 parts of hydroxylamine sulfate was added per 100 parts of monomer to terminate polymerization. Next, heating was performed, steam distillation was performed at approximately 70°C under reduced pressure to recover residual monomer, and then 2 parts of an alkylated phenol was added as an antioxidant to yield a water dispersion of a polymer.

Next, 400 mL (total solid content: 48 g) of the obtained water dispersion of the polymer was loaded into a 1 L autoclave equipped with a stirrer, and nitrogen gas was passed for 10 minutes so as to remove dissolved oxygen in the water dispersion of the polymer. Thereafter, 50 mg of palladium acetate as a hydrogenation reaction catalyst was dissolved in 180 mL of water to which nitric acid had been added in an amount of 4 molar equivalents relative to the Pd, and was then added into the autoclave. Purging of the system with hydrogen gas was performed twice, and then the contents of the autoclave were heated to 50°C in a state in which the pressure was raised to 3 MPa (gauge pressure) with hydrogen gas, and a hydrogenation reaction was carried out for 6 hours.

Thereafter, the contents were restored to normal temperature, the system was converted to a nitrogen atmosphere, and then an evaporator was used to perform concentrating to a solid content concentration of 40% to yield a water dispersion of hydrogenated nitrile rubber (HNBR-1).

Next, 200 parts of NMP was added to 100 parts of this water dispersion, water and residual monomer were completely evaporated under reduced pressure, and then NMP was also evaporated to yield an NMP solution of HNBR-1 (solid content concentration: 8%). The weight-average molecular weight of the obtained HNBR-1 was measured. The result is shown in Table 1. Note that the weight-average molecular weight was "130,000", but is denoted as "13" in Table 1 with "$\times 10^4$" omitted.

<Production of conductive material dispersion liquid (production method: A-1)>

Dispersing treatment of 5 parts of multi-walled carbon nanotubes (BET specific surface area: 250 m$^2$/g) as a conductive material, 12.5 parts (equivalent to 1 part as solid content) of the NMP solution of HNBR-1, and 82.5 parts of NMP was performed at a rotation speed of 3,000 rpm for 30 minutes using a disper blade while maintaining a temperature of 25°C or lower (first dispersing step). Next, dispersing treatment was performed at a circumferential speed of 30 m/s for 5 minutes using a thin-film spin system high-speed mixer (PRIMIX Corporation; product name: FILMIX, model 56-50) to produce a conductive material dispersion liquid (second dispersing step). The viscosity and viscosity stability of this conductive material dispersion liquid were evaluated. The results are shown in Table 1.

<Production of slurry for positive electrode>

A slurry for a positive electrode was produced by adding together 98.0 parts of a ternary active material having a layered structure (LiNi$_{0.6}$Co$_{0.2}$Mn$_{0.2}$O$_2$; average particle diameter: 10 μm) as a positive electrode active material, 1.0 parts of polyvinylidene fluoride as a binder, 1.0 parts (in terms of solid content) of the conductive material dispersion liquid, and NMP and performing mixing thereof (60 rpm, 30 minutes) in a planetary mixer. Note that the additive amount of NMP was adjusted such that the viscosity of the obtained slurry for a positive electrode (measured by single cylinder rotational viscometer in accordance with JIS Z8803:1991; temperature: 25°C; rotation speed: 60 rpm) was within a range of 4,000 mPa·s to 5,000 mPa·s.

<Production of positive electrode>

Aluminum foil of 20 μm in thickness was prepared as a current collector. The slurry for a positive electrode was applied onto the aluminum foil by a comma coater such as to have a coating weight after drying of 20 mg/cm$^2$, was dried at 90°C for 20 minutes and at 120°C for 20 minutes, and was then heat treated at 60°C for 10 hours to obtain a positive electrode web. This positive electrode web was rolled by roll pressing to produce a sheet-shaped positive electrode including a positive electrode mixed material layer of 3.2 g/cm$^3$ in density and aluminum foil. This sheet-shaped positive electrode was cut to 48.0 mm in width and 47 cm in length to obtain a positive electrode for a lithium ion secondary battery.

<Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the polymerization reaction and yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing a binder for a negative electrode.

Next, 48.75 parts of artificial graphite and 48.75 parts of natural graphite as negative electrode active materials and 1 part (in terms of solid content) of carboxymethyl cellulose as a thickener were loaded into a planetary mixer. These materials were diluted to a solid content concentration of 60% with deionized water and were subsequently kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. Deionized water was added to adjust the viscosity to $3,000 \pm 500$ mPa·s (measured by B-type viscometer at 25°C and 60 rpm) and thereby produce a slurry for a negative electrode.

The slurry for a negative electrode was applied onto the surface of copper foil of 15 $\mu$m in thickness serving as a current collector using a comma coater such as to have a coating weight of $10 \pm 0.5$ mg/cm$^2$. The copper foil with the slurry composition for a negative electrode mixed material layer applied thereon was subsequently conveyed inside an oven having a temperature of 80°C for 2 minutes and an oven having a temperature of 110°C for 2 minutes at a speed of 400 mm/min so as to dry the slurry for a negative electrode on the copper foil and thereby obtain a negative electrode web having a negative electrode mixed material layer formed on the current collector.

This negative electrode web was rolled by roll pressing to produce a sheet-shaped negative electrode including a negative electrode mixed material layer of 1.6 g/cm$^3$ in density and copper foil. The sheet-shaped negative electrode was cut to 50.0 mm in width and 52 cm in length to obtain a negative electrode for a lithium ion secondary battery.

<Production of lithium ion secondary battery>

The positive electrode for a lithium ion secondary battery and negative electrode for a lithium ion secondary battery were wound up with the electrode mixed material layers thereof facing each other and with a separator (microporous membrane made of polyethylene) of 15 $\mu$m in thickness in-between using a core of 20 mm in diameter so as to obtain a roll. The obtained roll was compressed to a thickness of 4.5 mm from one direction at a rate of 10 mm/s. Note that the compressed roll had an elliptical shape in plan view, and the ratio of the major axis and the minor axis (major axis/minor axis) was 7.7.

In addition, a LiPF$_6$ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) was prepared as an electrolyte solution.

The compressed roll was subsequently enclosed in a laminate case made of aluminum together with 3.2 g of the electrolyte solution. A nickel lead was connected to a specific position on the negative electrode, an aluminum lead was connected to a specific position on the positive electrode, and then an opening of the case was heat sealed to obtain a lithium ion secondary battery. This lithium ion secondary battery had a pouch shape of 35 mm in width, 60 mm in height, and 5 mm in thickness. The nominal capacity of the battery was 700 mAh.

Rate characteristics, cycle characteristics, and gas release inhibition were evaluated for the obtained lithium ion secondary battery. The results are shown in Table 1.

(Example 2)

A dispersant (HNBR-1), a slurry for a positive electrode, a positive electrode, a negative electrode, and a lithium ion secondary battery were produced and various evaluations were performed in the same way as in Example 1 with the exception that a conductive material dispersion liquid produced as described below was used. The results are shown in Table 1.

<Production of conductive material dispersion liquid (production method: B-2)>

Dispersing treatment of 5 parts of multi-walled carbon nanotubes (BET specific surface area: 250 m$^2$/g) as a conductive material, 12.5 parts (equivalent to 1 part as solid content) of the NMP solution of HNBR-1, and 82.5 parts of NMP was performed at a rotation speed of 60 rpm for 30 minutes using a planetary mixer while maintaining a temperature of 45°C (first dispersing step). Next, dispersing treatment was performed at a circumferential speed of 30 m/s for 5 minutes using a thin-film spin system high-speed mixer (PRIMIX Corporation; product name: FILMIX, model 56-50) to produce a conductive material dispersion liquid (second dispersing step).

(Example 3)

A slurry for a positive electrode, a positive electrode, a negative electrode, and a lithium ion secondary battery were produced and various evaluations were performed in the same way as in Example 1 with the exception that a dispersant (HNBR-2) and a conductive material dispersion liquid produced as described below were used. The results are shown in Table 1.

<Production of dispersant (HNBR-2)>

An NMP solution of HNBR-2 (solid content concentration: 8%) was obtained in the same way as HNBR-1 in Example 1 with the exception that the amount of TDM that was used was changed to 0.4 parts.

<Production of conductive material dispersion liquid (production method: B-3)>

Dispersing treatment of 5 parts of multi-walled carbon nanotubes (BET specific surface area: 250 m$^2$/g) as a conductive material, 6.25 parts (equivalent to 0.5 parts as solid content) of the NMP solution of HNBR-2, and 82.5 parts of NMP was performed at a rotation speed of 60 rpm for 30 minutes using a planetary mixer while maintaining a temperature of 25°C or lower (first dispersing step). Next, a further 6.25 parts (equivalent to 0.5 parts as solid content) of the NMP solution of HNBR-2 was added to the composition obtained after the first dispersing step, and then dispersing treatment was performed at a circumferential speed of 30 m/s for 5 minutes using a thin-film spin system high-speed mixer (PRIMIX Corporation; product name: FILMIX, model 56-50) to produce a conductive material dispersion liquid (second dispersing step).

(Example 4)

A dispersant (HNBR-1), a slurry for a positive electrode, a positive electrode, a negative electrode, and a lithium ion secondary battery were produced and various evaluations were performed in the same way as in Example 1 with the exception that a conductive material dispersion liquid produced as described below was used. The results are shown in Table 1.

<Production of conductive material dispersion liquid (production method: A-3)>

A conductive material dispersion liquid was produced in the same way as in production method A-1 in Example 1 with the exception that the circumferential speed of the thin-film spin system high-speed mixer in the second dispersing step was changed to 20 m/s.

(Example 5)

A dispersant (HNBR-1), a slurry for a positive electrode, a positive electrode, a negative electrode, and a lithium ion secondary battery were produced and various evaluations were performed in the same way as in Example 1 with the exception that a conductive material dispersion liquid produced as described below was used. The results are shown in Table 1.

<Production of conductive material dispersion liquid (production method: A-4)>

A conductive material dispersion liquid was produced in the same way as in production method A-1 in Example 1 with the exception that the circumferential speed of the thin-film spin system high-speed mixer in the second dispersing step was changed to 40 m/s.

(Example 6)

A dispersant (HNBR-1), a slurry for a positive electrode, a positive electrode, a negative electrode, and a lithium ion secondary battery were produced and various evaluations were performed in the same way as in Example 1 with the exception that a conductive material dispersion liquid produced as described below was used. The results are shown in Table 1.

<Production of conductive material dispersion liquid (production method: A-5)>

A conductive material dispersion liquid was produced in the same way as in production method A-1 in Example 1 with the exception that the dispersing treatment time by the thin-film spin system high-speed mixer in the second dispersing step was changed to 3 minutes.

(Example 7)

A dispersant (HNBR-1), a slurry for a positive electrode, a positive electrode, a negative electrode, and a lithium ion secondary battery were produced and various evaluations were performed in the same way as in Example 1 with the exception that a conductive material dispersion liquid produced as described below was used. The results are shown in Table 1.

<Production of conductive material dispersion liquid (production method: A-6)>

A conductive material dispersion liquid was produced in the same way as in production method A-1 in Example 1 with the exception that the dispersing treatment time by the thin-film spin system high-speed mixer in the second dispersing step was changed to 10 minutes.

(Example 8)

A conductive material dispersion liquid, a slurry for a positive electrode, a positive electrode, a negative electrode, and a lithium ion secondary battery were produced and various evaluations were performed in the same way as in Example 1 with the exception that a dispersant (ACL) produced as described below was used. The results are shown in Table 1.

<Production of dispersant (ACL)>

An autoclave equipped with a stirrer was charged with 164 parts of deionized water, 35 parts of 2-ethylhexyl acrylate, 32 parts of styrene, 30 parts of acrylonitrile, 3 parts of methacrylic acid, 0.3 parts of potassium persulfate as a polymerization initiator, 1.2 parts of sodium polyoxyethylene alkyl ether sulfate as an emulsifier, and 0.6 parts of TDM as a molecular weight modifier. These materials were thoroughly stirred and were then heated to 70°C for 3 hours and to 80°C for 2 hours in order to perform polymerization and thereby yield a water dispersion of an acrylic polymer (ACL). Note that the solid content concentration of this water dispersion was 37.3%, and the polymerization conversion rate determined from the solid content concentration was 96%.

Next, 200 parts of NMP was added to 100 parts of this water dispersion, water and residual monomer were completely evaporated under reduced pressure, and then NMP was also evaporated to yield an NMP solution of ACL (solid content concentration: 8%).

(Example 9)

A dispersant (HNBR-1), a slurry for a positive electrode, a positive electrode, a negative electrode, and a lithium ion secondary battery were produced and various evaluations were performed in the same way as in Example 1 with the exception that a conductive material dispersion liquid produced as described below was used. The results are shown in Table 1.

<Production of conductive material dispersion liquid (production method: C-2)>

Dispersing treatment of 5 parts of multi-walled carbon nanotubes (BET specific surface area: 250 $m^2/g$) as a conductive material, 6.25 parts (equivalent to 0.5 parts as solid content) of the NMP solution of HNBR-1, and 82.5 parts of NMP was performed at a rotation speed of 3,000 rpm for 30 minutes using a disper blade while maintaining a temperature of 25°C or lower (first dispersing step).

Next, a further 6.25 parts (equivalent to 0.5 parts as solid content) of the NMP solution of HNBR-1 was added to the composition obtained after the first dispersing step, and then a bead mill (produced by Ashizawa Finetech Ltd.; product name: LMZ015) was used to perform 20 minutes of mixing at a circumferential speed of 12 m/s with zirconia beads of 1.5 mm in diameter such that the apparent filling rate was 50 volume%. Next, 20 minutes of mixing was performed at a circumferential speed of 8 m/s with zirconia beads of 0.8 mm in diameter such that the apparent filling rate was 50 volume%. In addition, 20 minutes of mixing was performed at a circumferential speed of 12 m/s with zirconia beads of 0.8 mm in diameter such that the apparent filling rate was 80 volume% to produce a conductive material dispersion liquid (second dispersing step).

(Comparative Example 1)

A dispersant (HNBR-1), a slurry for a positive electrode, a positive electrode, a negative electrode, and a lithium ion secondary battery were produced and various evaluations were performed in the same way as in Example 1 with the exception that a conductive material dispersion liquid produced as described below was used. The results are shown in Table 2.

<Production of conductive material dispersion liquid (production method: A-2)>

Dispersing treatment of 5 parts of multi-walled carbon nanotubes (BET specific surface area: 250 $m^2/g$) as a conductive material, 6.25 parts (equivalent to 0.5 parts as solid content) of the NMP solution of HNBR-1, and 82.5 parts of NMP was performed at a rotation speed of 3,000 rpm for 30 minutes using a disper blade while maintaining a temperature of 25°C or lower (first dispersing step). A further 6.25 parts (equivalent to 0.5 parts as solid content) of the NMP solution of HNBR-1 was added to the composition obtained after the first dispersing step, and then dispersing treatment was performed at a circumferential speed of 30 m/s for 5 minutes using a thin-film spin system high-speed mixer (PRIMIX Corporation; product name: FILMIX, model 56-50) to produce a conductive material dispersion liquid (second dispersing step).

(Comparative Example 2)

A dispersant (HNBR-1), a slurry for a positive electrode, a positive electrode, a negative electrode, and a lithium ion secondary battery were produced and various evaluations were performed in the same way as in Example 1 with the exception that a conductive material dispersion liquid produced as described below was used. The results are shown in Table 2.

<Production of conductive material dispersion liquid (production method: B-1)>

Dispersing treatment of 5 parts of multi-walled carbon nanotubes (BET specific surface area: 250 $m^2/g$) as a conductive material, 12.5 parts (equivalent to 1 part as solid content) of the NMP solution of HNBR-1, and 82.5 parts of NMP was performed at a rotation speed of 60 rpm for 30 minutes using a planetary mixer while maintaining a temperature of 25°C or lower (first dispersing step). Next, dispersing treatment was performed at a circumferential speed of 30 m/s for 5 minutes using a thin-film spin system high-speed mixer (PRIMIX Corporation; product name: FILMIX, model 56-50) to produce a conductive material dispersion liquid (second dispersing step).

(Comparative Example 3)

A conductive material dispersion liquid, a slurry for a positive electrode, a positive electrode, a negative electrode, and a lithium ion secondary battery were produced and various evaluations were performed in the same way as in Comparative Example 2 with the exception that HNBR-2 produced in the same way as in Example 3 was used instead of HNBR-1 in production of the conductive material dispersion liquid. The results are shown in Table 2.

(Comparative Example 4)

A conductive material dispersion liquid, a slurry for a positive electrode, a positive electrode, a negative electrode, and a lithium ion secondary battery were produced and various evaluations were performed in the same way as in Comparative Example 1 with the exception that HNBR-2 produced in the same way as in Example 3 was used instead of HNBR-1 in production of the conductive material dispersion liquid. The results are shown in Table 2.

(Comparative Example 5)

A dispersant (HNBR-1), a slurry for a positive electrode, a positive electrode, a negative electrode, and a lithium ion secondary battery were produced and various evaluations were performed in the same way as in Example 1 with the exception that a conductive material dispersion liquid produced as described below was used. The results are shown in Table 2.

<Production of conductive material dispersion liquid (production method: C-1)>

Dispersing treatment of 5 parts of multi-walled carbon nanotubes (BET specific surface area: 250 $m^2/g$) as a conductive material, 12.5 parts (equivalent to 1 part as solid content) of the NMP solution of HNBR-1, and 82.5 parts of NMP was performed at a rotation speed of 3,000 rpm for 30 minutes using a disper blade while maintaining a temperature of 25°C or lower (first dispersing step).

Next, a bead mill (produced by Ashizawa Finetech Ltd.; product name: LMZ015) was used to mix the composition obtained after the first dispersing step at a circumferential speed of 8 m/s for 1 hour with zirconia beads of 1.25 mm in diameter such that the apparent filling rate was 80 volume% to produce a conductive material dispersion liquid (second dispersing step).

(Comparative Example 6)

A dispersant (HNBR-2), a slurry for a positive electrode, a positive electrode, a negative electrode, and a lithium ion secondary battery were produced and various evaluations were performed in the same way as in Example 3 with the exception that a conductive material dispersion liquid produced as described below was used. The results are shown in Table 2.

<Production of conductive material dispersion liquid (production method: C-3)>

Dispersing treatment of 5 parts of multi-walled carbon nanotubes (BET specific surface area: 250 $m^2/g$) as a conductive material, 6.25 parts (equivalent to 0.5 parts as solid content) of the NMP solution of HNBR-2, and 82.5 parts of NMP was performed at a rotation speed of 60 rpm for 30 minutes using a planetary mixer while maintaining a temperature of 25°C or lower (first dispersing step).

Next, a further 6.25 parts (equivalent to 0.5 parts as solid content) of the NMP solution of HNBR-2 was added to the composition obtained after the first dispersing step, and then mixing was performed at a circumferential speed of 8 m/s for 20 minutes using a bead mill (produced by Ashizawa Finetech Ltd.; product name: LMZ015) with zirconia beads of 1.25 mm in diameter such that the apparent filling rate was 80 volume% to produce a conductive material dispersion liquid (second dispersing step).

(Comparative Example 7)

A slurry for a positive electrode, a positive electrode, a negative electrode, and a lithium ion secondary battery were produced and various evaluations were performed in the same way as in Example 1 with the exception that a conductive material dispersion liquid produced as described below was used. The results are shown in Table 2.

<Production of conductive material dispersion liquid (production method: A-7)>

An NMP solution (solid content concentration: 8%) of polyvinylpyrrolidone (produced by Tokyo Chemical Industry Co., Ltd.; product name: PVP K15) was prepared.

Dispersing treatment of 4 parts of multi-walled carbon nanotubes (BET specific surface area: 250 $m^2/g$) as a conductive material, 12.5 parts (equivalent to 1 part as solid content) of the NMP solution of PVP, and 83.5 parts of NMP was performed at a rotation speed of 3,000 rpm for 30 minutes using a disper blade while maintaining a temperature of 25°C or lower (first dispersing step). Next, dispersing treatment was performed at a circumferential speed of 40 m/s for 1 minute using a thin-film spin system high-speed mixer (PRIMIX Corporation; product name: FILMIX, model 56-50) to produce a conductive material dispersion liquid (second dispersing step).

(Comparative Example 8)

A dispersant (HNBR-1), a slurry for a positive electrode, a positive electrode, a negative electrode, and a lithium ion secondary battery were produced and various evaluations were performed in the same way as in Example 1 with the exception that a conductive material dispersion liquid produced as described below was used. The results are shown in Table 2.

<Production of conductive material dispersion liquid (production method: A-8)>

Dispersing treatment of 5 parts of multi-walled carbon nanotubes (BET specific surface area: 250 m$^2$/g) as a conductive material, 12.5 parts (equivalent to 1 part as solid content) of the NMP solution of HNBR-1, and 82.5 parts of NMP was performed at a rotation speed of 3,000 rpm for 30 minutes using a disper blade while maintaining a temperature of 45°C (first dispersing step). Next, dispersing treatment was performed at a circumferential speed of 50 m/s for 20 minutes using a thin-film spin system high-speed mixer (PRIMIX Corporation; product name: FILMIX, model 56-50) to produce a conductive material dispersion liquid (second dispersing step).

Table 1

| | | | Example 1 | Example 2 | Example 3 | Example 4 | Example 5 | Example 6 | Example 7 | Example 8 | Example 9 |
|---|---|---|---|---|---|---|---|---|---|---|---|---|
| Conductive material dispersion liquid | Conductive material | Type | CNT | CNT | CNT | CNT | CNT | CNT | CNT | CNT | CNT |
| | | Thermal decomposition time [min] | 3.0 | 7.0 | 6.0 | 9.0 | 1.9 | 9.0 | 2.1 | 7.0 | 4.0 |
| | | BET specific surface area [m$^2$/g] | 250 | 250 | 250 | 250 | 250 | 250 | 250 | 250 | 250 |
| | | Content [mass%] | 5 | 5 | 5 | 5 | 5 | 5 | 5 | 5 | 5 |
| | Dispersant | Type | HNBR-1 | HNBR-1 | HNBR-2 | HNBR-1 | HNBR-1 | HNBR-1 | HNBR-1 | ACL | HNBR-1 |
| | | Mw [-] ($\times 10^4$ omitted) | 13 | 13 | 23 | 13 | 13 | 13 | 13 | 12 | 13 |
| | | Content [mass%] | 1 | 1 | 1 | 1 | 1 | 1 | 1 | 1 | 1 |
| | Dispersion medium | Type | NMP | NMP | NMP | NMP | NMP | NMP | NMP | NMP | NMP |
| | Solid content concentration [mass%] | | 6 | 6 | 6 | 6 | 6 | 6 | 6 | 6 | 6 |
| | Production method | | A-1 | B-2 | B-3 | A-3 | A-4 | A-5 | A-6 | A-1 | C-2 |
| Viscosity | | | A | B | B | C | A | B | B | B | A |
| Viscosity stability | | | A | B | A | B | C | C | A | B | A |
| Cycle characteristics | | | A | B | A | C | B | C | B | B | A |
| Rate characteristics | | | A | B | B | B | C | C | B | B | A |
| Gas release inhibition | | | A | B | B | C | B | B | C | B | B |

Table 2

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Conductive material dispersion liquid | Conductive material | Type | CNT | CNT | CNT | CNT | CNT | CNT | CNT | CNT |
| | | Thermal decomposition time [min] | 10.5 | 11.0 | 15< | 11.0 | 11.0 | 14.0 | 15< | 1.4 |
| | | BET specific surface area [m$^2$/g] | 250 | 250 | 250 | 250 | 250 | 250 | 250 | 250 |
| | | Content [mass%] | 5 | 5 | 5 | 5 | 5 | 5 | 4 | 5 |
| | Dispersant | Type | HNBR-1 | HNBR-1 | HNBR-2 | HNBR-2 | HNBR-1 | HNBR-2 | PVP | HNBR-1 |
| | | Mw [-] ($\times 10^4$ omitted) | 13 | 13 | 23 | 23 | 13 | 23 | 1 | 13 |
| | | Content [mass%] | 1 | 1 | 1 | 1 | 1 | 1 | 1 | 1 |
| | Dispersion medium | Type | NMP | NMP | NMP | NMP | NMP | NMP | NMP | NMP |
| | Solid content concentration [mass%] | | 6 | 6 | 6 | 6 | 6 | 6 | 5 | 6 |
| | Production method | | A-2 | B-1 | B-1 | A-2 | C-1 | C-3 | A-7 | A-8 |
| Viscosity | | | C | D | D | D | D | D | D | A |
| Viscosity stability | | | D | D | D | D | D | D | D | D |
| Cycle characteristics | | | D | D | C | C | D | C | D | C |
| Rate characteristics | | | D | D | D | D | D | D | D | D |
| Gas release inhibition | | | C | D | D | D | D | D | D | D |

It can be seen from Tables 1 and 2 that viscosity stability was excellent for the conductive material dispersion liquids of Examples 1 to 9, which each contained a conductive material including CNTs, a dispersant, and a dispersion medium and in each of which the thermal decomposition time of the CNTs was within a specific range, and that by using each of these conductive material dispersion liquids to produce a positive electrode, it was possible to cause a lithium ion secondary battery to display excellent rate characteristics. It can also be seen that in Examples 1 to 9, it was possible to produce a conductive material dispersion liquid having low viscosity and to provide a lithium ion secondary battery with excellent cycle characteristics while also inhibiting gas release in the lithium ion secondary battery.

INDUSTRIAL APPLICABILITY

According to the present disclosure, it is possible to provide a conductive material dispersion liquid for an electrochemical device that has excellent viscosity stability and is capable of forming an electrode that can cause an electrochemical device to display excellent rate characteristics.

Moreover, according to the present disclosure, it is possible to provide a slurry for an electrochemical device electrode that is capable of forming an electrode that can cause an electrochemical device to display excellent rate characteristics.

Furthermore, according to the present disclosure, it is possible to provide an electrode for an electrochemical device that can cause an electrochemical device to display excellent rate characteristics.

Also, according to the present disclosure, it is possible to provide an electrochemical device that has excellent rate characteristics.

**Claims**

1. A conductive material dispersion liquid for an electrochemical device comprising a conductive material, a dispersant, and a dispersion medium, wherein

   the conductive material includes one or more carbon nanotubes, and
   the carbon nanotubes have a thermal decomposition time of not less than 1.5 min/mg and less than 10 min/mg, the thermal decomposition time being a value determined by:

   drying the conductive material dispersion liquid for an electrochemical device at a temperature of 130°C for 2 hours to remove the dispersion medium and obtain a residue;
   heating the residue from 25°C to 600°C at a heating rate of 20°C/min in a nitrogen atmosphere and subsequently heating the residue at 600°C for 10 minutes to prepare a measurement sample; and
   preparing a thermogravimetric curve and a derivative thermogravimetric curve from mass change and elapsed time when heat treatment of the measurement sample is performed at 600°C in an air atmosphere, and then calculating the thermal decomposition time by formula (I), shown below,

   $$\text{thermal decomposition time } T = (T_1 - T_0)/W_0 \cdots (I)$$

   where, in formula (I):

   $T_0$ is an elapsed time, in units of minutes, at which the derivative thermogravimetric curve takes a local minimum value directly before a final peak;
   $T_1$ is time taken, in units of minutes, for mass $M_1$ of the measurement sample at an elapsed time of $T_0$ minutes to decrease to $M_1 \times 0.10$ as determined from the thermogravimetric curve; and
   $W_0$ is weight, in units of milligrams, of the measurement sample when the heat treatment at 600°C in the air atmosphere begins.

2. The conductive material dispersion liquid for an electrochemical device according to claim 1, wherein the dispersant includes a nitrile group-containing monomer unit.

3. A slurry for an electrochemical device electrode comprising: the conductive material dispersion liquid for an electrochemical device according to claim 1 or 2; and an electrode active material.

4. An electrode for an electrochemical device comprising an electrode mixed material layer formed using the slurry for an electrochemical device electrode according to claim 3.

5. An electrochemical device comprising the electrode for an electrochemical device according to claim 4.

# FIG. 1

## INTERNATIONAL SEARCH REPORT

| International application No. |
| --- |
| **PCT/JP2021/031240** |

**A.    CLASSIFICATION OF SUBJECT MATTER**

*H01M 4/13*(2010.01)i; *H01M 4/139*(2010.01)i; *H01M 4/62*(2006.01)i; *H01G 11/06*(2013.01)i; *H01G 11/36*(2013.01)i
FI:    H01M4/62 Z; H01M4/13; H01M4/139; H01G11/06; H01G11/36

According to International Patent Classification (IPC) or to both national classification and IPC

**B.    FIELDS SEARCHED**

Minimum documentation searched (classification system followed by classification symbols)

H01M4/13; H01M4/139; H01M4/62; H01G11/06; H01G11/36

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2017-206412 A (TODAKOGYO CORP.) 24 November 2017 (2017-11-24) | 1-5 |
| A | JP 2020-19705 A (LG CHEM, LTD.) 06 February 2020 (2020-02-06) | 1-5 |
| A | JP 2016-21390 A (ZEON CORP.) 04 February 2016 (2016-02-04) | 1-5 |
| A | WO 2012/060454 A1 (NATIONAL INSTITUTE OF ADVANCED INDUSTRIAL SCIENCE AND TECHNOLOGY) 10 May 2012 (2012-05-10) | 1-5 |
| A | WO 2018/043487 A1 (TORAY INDUSTRIES, INC.) 08 March 2018 (2018-03-08) | 1-5 |
| A | JP 2015-20939 A (TORAY INDUSTRIES, INC.) 02 February 2015 (2015-02-02) | 1-5 |
| A | JP 2009-242117 A (TORAY INDUSTRIES, INC.) 22 October 2009 (2009-10-22) | 1-5 |

☐ Further documents are listed in the continuation of Box C.    ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **01 November 2021** | **09 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/031240**

| Patent document cited in search report | | | Publication date (day/month/year) | Patent family member(s) | | | Publication date (day/month/year) |
|---|---|---|---|---|---|---|---|
| JP | 2017-206412 | A | 24 November 2017 | (Family: none) | | | |
| JP | 2020-19705 | A | 06 February 2020 | US | 2018/0226650 | A1 | |
| | | | | EP | 3348582 | A1 | |
| | | | | KR | 10-2017-0030438 | A | |
| | | | | CN | 108064255 | A | |
| JP | 2016-21390 | A | 04 February 2016 | (Family: none) | | | |
| WO | 2012/060454 | A1 | 10 May 2012 | US | 2013/0316160 | A1 | |
| | | | | EP | 2636642 | A1 | |
| | | | | CN | 103201214 | A | |
| WO | 2018/043487 | A1 | 08 March 2018 | (Family: none) | | | |
| JP | 2015-20939 | A | 02 February 2015 | (Family: none) | | | |
| JP | 2009-242117 | A | 22 October 2009 | (Family: none) | | | |

Form PCT/ISA/210 (patent family annex) (January 2015)

32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018533175 A
- WO 2017010093 A1
- JP 2018127397 A
- JP 2012204303 A